**Europäisches Patentamt**

**European Patent Office**

**Office européen des brevets**

(11) Veröffentlichungsnummer: **0 469 422 A1**

## (12) EUROPÄISCHE PATENTANMELDUNG

(21) Anmeldenummer: **91112207.5**

(22) Anmeldetag: **20.07.91**

(51) Int. Cl.5: **D03D 13/00**, D03D 1/00, E02D 17/20

(30) Priorität: **27.07.90 DE 4024622**

(43) Veröffentlichungstag der Anmeldung: **05.02.92 Patentblatt 92/06**

(84) Benannte Vertragsstaaten: **AT BE CH DK FR GB IT LI NL**

(71) Anmelder: **OTTO GOLZE & SÖHNE GmbH Postfach 10 04 44, Werftstrasse 20 W-3250 Hameln 1(DE)**

(72) Erfinder: **Golze, Otto-Günther Holtenser Landstrasse 55 W-3250 Hameln 1(DE)**

(74) Vertreter: **UEXKÜLL & STOLBERG Patentanwälte Beselerstrasse 4 W-2000 Hamburg 52(DE)**

(54) **Gewebebahn zum Erosionsschutz.**

(57) Die Erfindung betrifft eine Gewebebahn zum Erosionsschutz von Erdschichten, insbesondere an Böschungen, welche aus pflanzlichen Hartfasern mit rechtwinkelig miteinander verkreuzten Fäden besteht, die dadurch gekennzeichnet ist, daß einzelne Fäden (4, 6) in regelmäßigen oder unregelmäßigen Abständen als Schlingen (4', 6') aus der Gewebeebene oder getuftet auus dieser herausragen und jeweils wenigstens einen kreuzenden Faden überspannen.

FIG.1

EP 0 469 422 A1

Die Erfindung betrifft eine Gewebebahn zum Erosionsschutz aufgeschütteter Erdschichten gemäß Oberbegriff des Anspruchs 1.

Gewebebahnen dieser Art werden zur Sicherung und Befestigung aufgeschütteter Bodenschichten gegen Abschwemmung und Erosion im Landschaftsbau, beispielsweise an Böschungen oder Uferzonen verwendet, um eine zuverlässige und dauerhafte Bepflanzung zu erreichen und den zur Bepflanzung geeigneten Humusboden nach Aufschüttung über einen längeren Zeitraum bis zum sicheren Anwachsen und zur Verwurzelung der Vegatation gegen Abschwemmung zu schützen. Zu diesem Zweck werden die Erosionsschutzgewebe oder Geotextilien flächig auf der zu befestigenden Erdschicht ausgelegt und gegebenenfalls eingeschwemmt oder als Schutzbänder zu zaunartigen Befestigungen aufgestellt.

Als Schutzgewebe haben sich insbesondere grobmaschige Gewebe aus Naturfasern als vorteilhaft erwiesen, die hohe Wasser- und Luftdurchlässigkeit mit hoher Reißfestigkeit kombinieren; die Verwendung von Naturfasern ist darüber hinaus vorteilhaft, weil diese im Verlaufe mehrerer Vegetationsperioden ohne belastende Rückstände verrotten und die Befestigung nach dem Anwachsen der Bepflanzung ohne umweltbelastende Nachwirkungen bleibt. Ein solches Gewebe ist aus DE-GM 8422934 bekannt, die ein Stützband aus einem Gewebe pflanzlicher Hartfasern offenbart das zur Abstützung einer Böschungsdecke hochkant aufgestellt wird. Es ist ferner bekannt, Naturfasergewebe in flächiger oder netzartiger Weise parallel zur Bodenfläche auszulegen, um einen Mutterbodenabtrag zu vermeiden. Die bekannten Gewebe haben jedoch in dieser Anwendung insofern keine vollständig zufriedenstellende Wirkung, da sie aufgrund ihrer flachen Gewebestruktur eine Verquikkung mit der umgebenden Bodenschicht nur sehr begrenzt ermöglichen.

Der Erfindung liegt die Aufgabe zugrunde, eine Gewebebahn zu schaffen, die in dem zu sichernden Bodenareal ausgelegt und verankert werden kann und deren Gewebestruktur so gestaltet ist, daß eine bessere Verbindung und Verquickung zwischen Gewebe und Bodenmaterial auch außerhalb der eigentlichen Gewebefläche erreicht wird, um so einen besseren Schutz der umgebenden Bodenschicht gegen seitlichen Abtrag und Abschwemmung bzw. gegen Erosion zu gewährleisten.

Zur Lösung dieser Aufgabe dient die Gewebebahn mit den kennzeichnenden Merkmalen des Anspruchs 1, wobei weitere Ausführungsformen in den Unteransprüchen aufgeführt sind.

Die erfindungsgemäße Gewebebahn basiert auf grobmaschigem Naturfasergewebe aus zwei rechtwinklig miteinander verkreuzten Fadensystemen, in dem in regelmäßigen oder unregelmäßigen Abständen gesonderte Fäden enthalten sind. Diese gesonderten Fäden unterscheiden sich dadurch von den übrigen, daß sie nicht überall flach in das Gewebe eingewebt sind, sondern an einigen Stellen als Schlingen aus der Gewebefläche herausragen oder getuftet sind. Dadurch entsteht eine dreidimensionale Gewebestruktur, die aus der eigentlichen Gewebeebene und senkrecht dazu aufgestellten Schlingen besteht. Mit dieser zusätzlichen Ausdehnung oder Dimension reicht das erfindungsgemäße Gewebe senkrecht in das umgebende Material hinein und sorgt so für eine zusätzliche Stabilisierung der Bodenschicht, insbesondere gegen quer zur Bodenfläche wirkende Abtriebskräfte, wie sie durch abfließendes Regenwasser verursacht werden. Dadurch leistet das Schutzgewebe dem Wegschwemmen von Bodenmaterial durch fließendes Wasser wirksamen Widerstand. Die dreidimensionale Ausbildung der Gewebebahnen wirkt schon vor der Verankerung von Boden- oder Erdmaterial bereits durch eine Verzögerung von überströmenden Wasser und eine beginnende Ablagerung von Feststoffen im Boder/Wasser-Grenzbereich.

Die Erfindung wird im folgenden anhand eines Ausführungsbeispiels näher beschrieben; es zeigt:

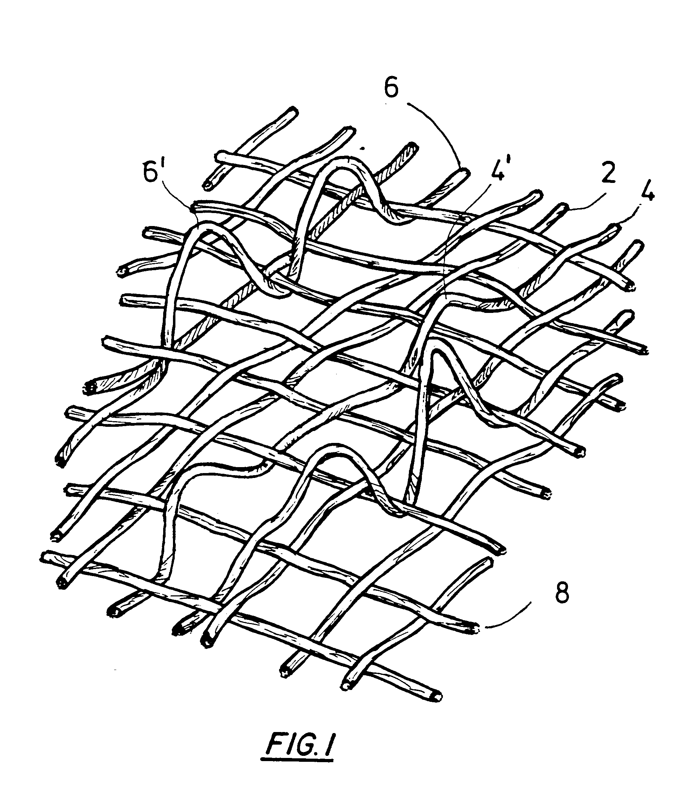

Figur 1     eine perspektivische Darstellung der Gewebestruktur der Gewebebahn.

Das in Figur 1 dargestellte Gewebe weist zwei rechtwinkelig miteinander verkreuzte Fadensysteme aus Kettfäden 2 und Schußfäden 8 auf. In regelmäßigen Geweben kreuzen die Kettfäden 2 die Schußfäden 8 abwechselnd oberhalb und unterhalb der Schußfadenebene auf kürzestem Weg; diese regelmäßige Gewebestruktur ist in dem erfindungsgemäßen Ausführungsbeispiel teilweise durchbrochen, indem einzelne Kettfäden 4, 6 die Schußfäden nicht überall auf kürzestem Weg durchkreuzen, sondern zu Schlingen 4', 6' verlängert nach oben geschleift sind. Die Schlingen wechseln sich entlang des Kettfadens 4 mit Bereichen enger Verkreuzung mit den Schußfäden ab, wie dies für die Schlinge 4' angedeutet ist, wodurch für eine sichere Einbindung des mit Schlingen versehenen Kettfadens 4 in das Gewebe erreicht wird. Der Schlingenfaden kann auch einen Kettfaden überspringen und auf vielfältige Weise unregelmäßig geführt sein.

Die Schlingen können in regelmäßiger oder unregelmäßiger Verteilung längs der Kettfäden 4, 6 ausgebildet sein; sie können sich ebenfalls hinsichtlich ihres Umfangs in der Weise unterscheiden, daß mehr als ein Schußfaden von einer Schlinge bogenförmig überspannt wird. Es ist eine Vielzahl von Variationsmöglichkeiten der Gewebestruktur hinsichtlich der Häufigkeiten von mit Schlingen versehenen Kettfäden und hinsichtlich der Anordnung und Verteilung von Schlingen an den Kettfäden gegeben; so können beispielsweise bei einer besonders bevorzugten Ausführungsform die die Schlingen bildenden Kettfäden beidseitig eng von jeweils einem benachbarten Kettfaden gehalten werden und zu den nächsten Kettfäden einen größeren Abstand aufweisen. Der herausragende Kettfaden muß auch nicht durch gerade verlaufende Kettfäden begrenzt sein; es lassen sich für die Kettfäden und/oder für die herausragenden Fäden auch solche mit großer Rauhigkeit wie beispielsweise Kokosfäden mit Jutestruktur verwenden.

Das Gewebe besteht aus pflanzlichen Fasern, wie beispielsweise Kokos-, Sisal-, Jute- oder Hanffasern oder auch aus Stroh und Flachs, gegebenenfalls in Kombination mit den oben genannten Hartfasern. Die Verwendung derartiger Hartfasern oder Mischfasern verleiht einerseits den aufgestellten Schlingen genügend Stabilität, so daß Widerstand gegen seitlichen Abtrag und Wegschwemmen geleistet und die aufgeschüttete Erdschicht festgehalten wird. Zu diesem Zweck sollten die Schlingen eine ausreichende Höhe haben und aus der Gewebefläche z.B. um wenigstens 0,5 bis 1,0 mm herausragen. Andererseits ist die Verwendung pflanzlicher Fasern vorteilhaft, da das Schutzgewebe nach dem Anwachsen der Bepflanzung in der Erdschicht ohne belastende Rückstände verrottet.

Das Gewebe wird in Form einer länglichen Schutzgewebebahn hergestellt, die am Einsatzort ausgerollt und verlegt wird. Zur Abdeckung größerer Flächen werden mehrere Bahnen nebeneinanderliegend miteinander verknüpft oder überlappend verpflockt oder auf anderere Weise im Erdboden verankert. Anstelle einer Gewebebahn kann auch jede beliebige Textilbahn verwendet werden, die auch getuftet sein kann.

**Patentansprüche**

1. Gewebebahn zum Erosionsschutz von Erdschichten, insbesondere an Böschungen, welche aus pflanzlichen Hartfasern oder Mischfasern mit rechtwinkelig miteinander verkreuzten Fäden besteht, dadurch gekennzeichnet, daß einzelne Fäden (4, 6) in regelmäßigen oder unregelmäßigen Abständen als Schlingen (4', 6') oder getuftet aus der Gewebeebene herausragen und jeweils wenigstens einen kreuzenden Faden überspannen.

2. Schutzgewebebahn nach Anspruch 1, dadurch gekennzeichnet, daß die die Schlingen aufweisenden Fäden Kettfäden (4, 6) sind und in regelmäßiger Abfolge mit Kettfäden ohne Schlingen (2) aufeinanderfolgen.

3. Schutzgewebebahn nach Anspruch 1 oder 2, dadurch gekennzeichnet, daß die Schlingen (4', 6') jeweils einen Schußfaden überspannen.

4. Schutzgewebebahn nach einem der Ansprüche 1 bis 3, dadurch gekennzeichnet, daß beidseitig des die Schlingen bildenden Kettfadens eng benachbart jeweils ein Kettfaden angeordnet ist, der gegenüber dem weiteren Kettfaden einen größeren Abstand aufweist.

5. Schutzgewebebahn nach einem der Ansprüche 1 bis 4, dadurch gekennzeichnet, daß die Schlingen (4', 6') wenigstens 1 cm aus der Gewebefläche herausragen.

_FIG. 1_

| EINSCHLÄGIGE DOKUMENTE | | | EP 91112207.5 | |
|---|---|---|---|---|
| **Kategorie** | **Kennzeichnung des Dokuments mit Angabe, soweit erforderlich, der maßgeblichen Teile** | | **Betrifft Anspruch** | **KLASSIFIKATION DER ANMELDUNG (Int Cl.⁴)** |
| A | US - A - 4 819 372 (SCHÜRHOLZ) \* Gesamt; insbes. Spalte 4, Zeilen 14-20 \* | | 1 | D 03 D 13/00 D 03 D 1/00 E 02 D 17/20 |
| D | & DE-U-8 422 934 -- | | | |
| A | US - A - 3 015 148 (HADDAD) \* Fig. 1-3 \* -- | | 1 | |
| A | EP - A1 - 0 235 853 (AKZO N.V.) ---- | | | |

**RECHERCHIERTE SACHGEBIETE (Int. Cl.⁴)**

D 03 D 1/00
D 03 D 13/00
E 02 D 17/00
D 03 D 15/00

Der vorliegende Recherchenbericht wurde für alle Patentansprüche erstellt.

| Recherchenort | Abschlußdatum der Recherche | Prüfer |
|---|---|---|
| WIEN | 07-11-1991 | BAUMANN |